Europäisches Patentamt

(19) European Patent Office

Office européen des brevets

(11) Numéro de publication: **0 034 974**
**B1**

# FASCICULE DE BREVET EUROPEEN

(12)

(45) Date de publication du fascicule du brevet:
30.05.84

(21) Numéro de dépôt: 81400229.1

(22) Date de dépôt: 13.02.81

(51) Int. Cl.³: **G 01 S 1/02**, G 01 S 1/40,
G 01 S 1/50

(54) Dispositif de contrôle d'un système de radionavigation du type VOR DOPPLER, et système VOR DOPPLER le comprenant.

(30) Priorité: 26.02.80 FR 8004212

(43) Date de publication de la demande:
02.09.81 Bulletin 81/35

(45) Mention de la délivrance du brevet:
30.05.84 Bulletin 84/22

(84) Etats contractants désignés:
CH DE GB IT LI NL

(56) Documents cités:
US - A - 3 958 244
US - A - 4 005 427

ELECTRICAL COMMUNICATION, vol. 43, no. 2, 1968
NEW YORK (US) CRONE et POPP: "Doppler VOR
Ground Equipment", pages 143-149
ELECTRICAL COMMUNICATION, vol. 50, no. 4, 1975
NEW YORK (US) HOFGEN: "VOR and DOPPLER VOR",
pages 245-248
PHILIPS TELECOMMUNICAITON REVIEW, vol. 34, no. 1,
avril 1976 HILVERSUM (NL) VAN DEN BERG: "The
Philips Doppler VOR Beacon RN 200", pages 1-10
PHILIPS TELECOMMUNICATION REVIEW, vol. 32, no. 3,
août 1974 HILVERSUM (NL) VAN DEN BERG et al.: "The
Philips VOR Beacon type RN 100", pages 105-116

(73) Titulaire: **THOMSON-CSF, 173, Boulevard Haussmann,
F-75379 Paris Cedex 08 (FR)**

(72) Inventeur: **Grousseau, Alain, THOMSON-CSF
SCPI 173, bld Haussmann, F-75360 Paris Cedex 08 (FR)**
Inventeur: **Becavin, Henri, THOMSON-CSF SCPI 173, Bld
Haussmann, F-75360 Paris Cedex 08 (FR)**

(74) Mandataire: **Benoit, Monique et al, THOMSON-CSF
SCPI 173, Bld Haussmann, F-75379 Paris Cedex 08 (FR)**

## Description

La présente invention concerne un dispositif de contrôle d'un système de radionavigation du type VOR Doppler.

Un système VOR, c'est-à-dire une radiobalise omnidirectionnelle très haute fréquence, permet de fournir à chaque aéronef équipé d'un récepteur approprié une information de relèvement par rapport à cette balise au sol dont la position géographique est connue. L'accroissement du traffic aérien, tant national qu'international, et du nombre des routes aériennes impose à chaque pays d'avoir une couverture radio-électrique aussi sûre et fiable que possible. Cette couveture est en partie assurée par les systèmes VOR qui jalonnent les routes aériennes.

Le système VOR rayonnant un signal dans la bande métrique, soit 108-118 MHz, la qualité de ce signal est très largement tributaire du site sur lequel le VOR est installé. En effet, le rayonnement omnidirectionnel réfléchi par des obstacles génère des erreurs telles qu'elles peuvent rendre le système inutilisable. C'est pourquoi, dans les sites accidentés, on remplace le VOR conventionnel par le VOR Doppler, dont les principes vont être exposés dans la suite.

De façon générale, un système VOR fait correspondre à l'angle d'azimut O de l'aéronef par rapport au nord magnétique du site de l'émetteur sol, la différence de phase existant entre deux signaux sinusoïdaux à la fréquence 30 Hz qui modulent une fréquence porteuse très haute fréquence. Pour cela, les antennes constituant le système VOR rayonnent une onde porteuse très haute fréquence VHF modulée en amplitude d'une part par une première onde sinusoïdale basse fréquence de fréquence 30 Hz et d'autre part par une deuxième onde basse fréquence de fréquence 9960 Hz, elle-même modulée en fréquence par un signal sinusoïdal de fréquence 30 Hz.

Un système VOR conventionnel rayonne deux signaux:
— un signal de «référence», rayonné omnidirectionnellement, constitué par une porteuse HF modulée en amplitude par une sous-porteuse à 9960 Hz, elle-même modulée en fréquence par un signal sinusoïdal 30 Hz,
— un signal «variable» rayonné suivant un diagramme en huit tournant à 30 tours par seconde et dont l'enveloppe BF des bandes latérales a une phase caractéristique de l'azimut.

Ces deux signaux se combinent dans l'espace pour donner le signal VOR complet.

Par contre, dans un système VOR Doppler, le mode de transmission des informations Référence et Variable est inversé par rapport au VOR conventionnel. Ainsi, le signal 30 Hz de Référence est transmis omnidirectionnellement par modulation d'amplitude de l'onde VHF, et l'information d'azimut est transmise par modulation de fréquence à 30 Hz des deux bandes latérales à ± 9960 Hz de l'onde porteuse. Ces deux bandes latérales sont émises indépendamment l'une de l'autre par deux circuits distincts. Le diagramme omnidirectionnel transmettant l'information de référence est rayonné par l'antenne centrale alors que l'autre diagramme contenant l'information d'azimut est obtenu en faisant tourner sur un cercle de périmètre égal à l'indice de modulation, en longueurs d'onde à la fréquence de fonctionnement, deux antennes diamétralement opposées et alimentées chacune par une des bandes latérales à ∓ 9960 Hz de la fréquence porteuse. La fréquence de rotation de ces antennes est 30 Hz. Pour des raisons pratiques évidentes, la rotation de ces antennes est simulée par la commutation de plusieurs antennes en nombre N placées sur un cercle en appliquant une fonction de pondération appropriée sur l'alimentation de ces antennes de manière à simuler le mouvement progressif du point d'émission d'une antenne à l'autre.

L'utilisation du système VOR normalisé par l'Organisation de l'Aviation Civile Internationale (OACI) nécessite un dispositif de contrôle, surveillant l'intégrité du signal émis par le VOR et pour cela, notamment le bon fonctionnement de la commutation des N antennes, dans les cas du VOR Doppler. Dans le brevet US-A-3 958 244 est décrit un dispositif de contrôle d'un système VOR Doppler permettant de détecter les pannes des antennes commutables du système.

Dans le système VOR conventionnel, les antennes rayonnant les deux signaux de modulation d'amplitude de l'onde porteuse VHF sont implantées sur un même axe vertical, de telle sorte qu'il est possible de placer un capteur à proximité, à une distance de l'ordre de quelques longueurs d'ondes λ, par exemple. Lorsque ce capteur est placé de préférence en un des points d'intersection des deux lobes principaux du diagramme de rayonnement des bandes latérales émis par les antennes, le signal recueilli par le capteur dans cette direction est représentatif de celui émis dans toutes les directions.

Dans le système VOR Doppler, le signal issu d'un capteur proche des antennes ne représente pas fidèlement le rayonnement émis à l'infini dans cette direction, à cause de la trop grande envergure de réseau d'antennes. L'effet de parallaxe affecte à ce signal une modulation de phase parasite des bandes latérales à ∓ 9960 Hz supérieure à 200° crête à crête pour un capteur situé à une distance égale à 5 λ, soit environ 14 mètres de l'antenne centrale. Il interdit donc la détection d'enveloppe d'une onde modulée en amplitude. Il faut alors repousser ce capteur à plus de 100 λ pour voir cette modulation descendre en dessous de 10 degrés crête à crête (λ étant la longueur d'onde à la fréquence de fonctionnement). Un exemple du dispositif de contrôle d'un système VOR Doppler comprenant un capteur lointain du signal VOR émis et un dispositif de traitement de ce signal est donné dans le brevet US-A-4 005 427. De plus, il n'existe pas de direction privilégiée dans laquelle l'information reçue par le capteur est représentative de celle reçue dans toute autre direction, contrairement au VOR conventionnel. Pour contrôler le système VOR Doppler, il est donc nécessaire de disposer plusieurs capteurs lointains dans différentes directions. Mais leur implantation est parfois très difficile, sinon impossible, notamment dans des sites accidentés. Ces conditions s'aggravent quand, pour tracer une courbe d'erreur de maintenance, douze au moins de ces capteurs sont nécessaires. D'autre part, on a vu précédemment que les deux bandes

latérales à ∓ 9960 Hz étaient émises indépendamment l'une de l'autre, de sorte que le contrôle effectif de l'intégrité de l'émission du système VOR nécessite la restitution intégrale de chacune des bandes.

Le but de l'invention est alors de réaliser un dispositif de contrôle d'un système radionavigation du type VOR Doppler, comprenant un système de traitement particulier du signal prélevé par un ou plusieurs capteurs placés à proximité du système. Ce dispositif permet de détecter les pannes d'émission des antennes, afin de pouvoir garantir la qualité du signal fourni à l'aéronef, quel que soit son azimut.

Selon une caractéristique de l'invention, le dispositif de contrôle d'un système de radionavigation du type VOR Doppler, système comportant une antenne centrale rayonnant omnidirectionellement une onde porteuse très haute fréquence modulée en amplitude par un premier signal sinusoïdal de fréquence 30 Hz dit «de référence», et par un réseau circulaire d'antennes rayonnant les deux bandes latérales à ± 9960 Hz de la modulation d'amplitude de l'onde porteuse VHF, ces bandes latérales étant elles-mêmes modulées en fréquence par un second signal sinusoïdal de fréquence 30 Hz, dit «variable», dont la phase varie par rapport à celle du premier signal 30 Hz, comprenant des moyens de contrôle du signal émis par le système VOR Doppler comportant un capteur placé à proximité des antennes d'émission du système VOR, est caractérisé conformément à l'actuelle revendication 1.

Ce dispositif de contrôle restitue bien intégralement chacune des deux bandes latérales à ± 9960 Hz. De plus, comme un récepteur de bord habituel n'utilise que la partie de ces bandes latérales en phase avec la fréquence de l'onde porteuse VHF, ce dispositif de contrôle nécessite le contrôle de la phase de la porteuse fantôme des bandes latérales avec celle de l'onde VHF et le contrôle de la commutation des antennes.

D'autres avantages et caractéristiques de l'invention apparaîtront dans la description qui suit, illustrée par les figures suivantes représentant des exemples de réalisation non limitatifs:

la figure 1, le schéma synoptique d'un dispositif de contrôle d'un système VOR Doppler, selon l'art antérieur;

la figure 2, le schéma synoptique d'un dispositif de contrôle d'un système VOR Doppler, selon l'invention;

les figures 3 et 4, les schémas détaillés de deux exemples de réalisation non limitatifs d'un dispositif de contrôle selon l'invention.

Les éléments identiques dans les différentes figures qui assurent les mêmes fonctions portent les mêmes références et ne seront pas décrits deux fois.

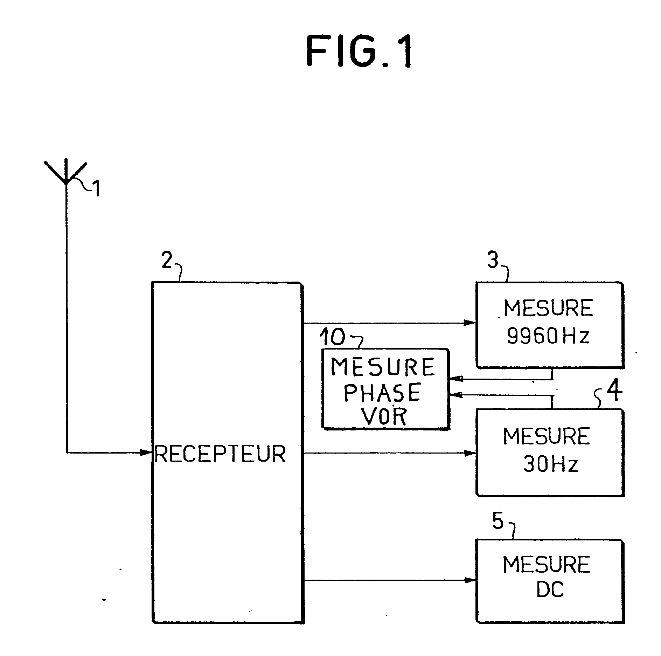

Suivant l'art antérieur, le dispositif de contrôle d'un système VOR Doppler se décompose en deux parties, un premier système de contrôle du signal VOR émis représenté sur la figure 1, et un second système de contrôle du commutateur des N antennes rayonnant le signal 30 Hz «variable».

Le contrôle du signal émis se fait donc par un capteur 1, constitué par exemple par une antenne de réception du type Yagi implantée à environ 250 mètres de la station, suivi par un récepteur classique 2.

Quatre circuits 3, 4, 5 et 10 classiques de mesure permettent de contrôler les paramètres suivants:

— le circuit 3: le taux de modulation des bandes latérales à ± 9960 Hz de l'onde porteuse VHF;

— le circuit 4: le taux de modulation du signal 30 Hz «de référence»;

— le circuit 5: le niveau HF de la composante continue du signal émis par le système VOR;

— le circuit 10: la différence de phase entre le signal 30 Hz «de référence» et le signal 30 Hz «variable».

Le contrôle du commutateur des antennes émettant les bandes latérales ± 9960 Hz de l'onde porteuse VHF modulée en amplitude se fait tout d'abord par la détection de l'amplitude des deux bandes latérales simultanément reçues par l'antenne centrale et ensuite par la recherche d'un spectre de modulation d'amplitude. L'expérience montre qu'il est difficile de constater la ou les pannes d'émission de l'une des bandes latérales indépendamment de l'autre.

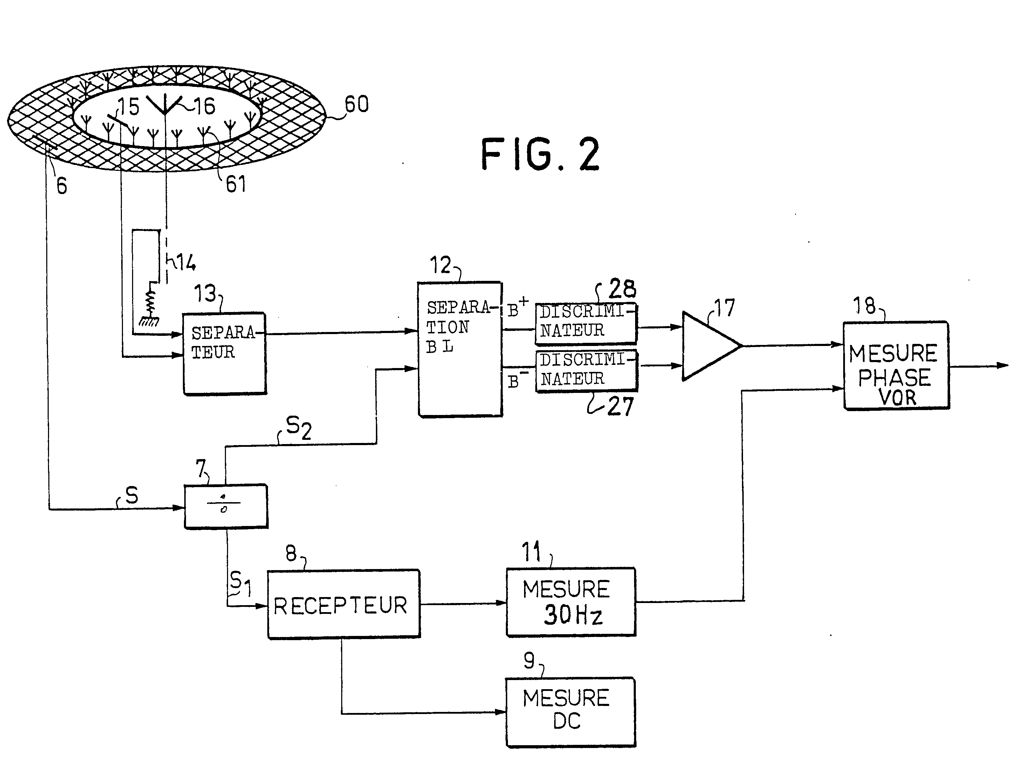

Ce dispositif de contrôle présentant les inconvénients décrits auparavant, l'invention concerne un nouveau dispositif représenté figure 2. Il comporte un capteur 6 placé sur le support 60 des N antennes 61 donc proche du système VOR Doppler. Le signal S issu de ce capteur 6 est divisé en deux signaux identiques $S_1$ et $S_2$ dans le circuit 7. Une première partie $S_1$ passe dans une chaîne de traitement identique à celle décrite dans la figure 1. Cette chaîne comporte donc un circuit récepteur 8 et deux circuits de mesure classiques, dont le premier 9 effectue la mesure du niveau de l'onde porteuse haute fréquence; et le second circuit 11 permet la mesure du taux de modulation du signal 30 Hz «de référence». Un ensemble de moyens 12 réalisant la séparation des bandes latérales supérieure et inférieure de l'onde porteuse VHF, captée par le capteur 6, reçoit d'une part la seconde partie $S_2$ du signal S issu du capteur 6 et d'autre part un étalon de la fréquence porteuse par l'intermédiaire du circuit séparateur 13, cet étalon étant issu soit d'un coupleur 14 placé sur le feeder de l'antenne, soit d'un capteur 15 proche de l'antenne centrale 16. A la sortie des moyens 12, les signaux de modulation de fréquence sont extraits des deux bandes latérales à l'aide des deux circuits de discrimination 27 et 28 et ajoutés dans un circuit sommateur 17 pour donner le signal à 30 Hz «variable» modulant en fréquence le signal 9960 Hz de modulation d'amplitude de l'onde porteuse VHF. Ce signal ainsi que le signal sinusoïdal «de référence» à 30 Hz passent dans un circuit de mesure de phase classique 18, qui compare la phase du premier signal par rapport au second, de telle sorte qu'en sortie du circuit 18 on obtienne l'information VOR émise dans la direction du capteur 6.

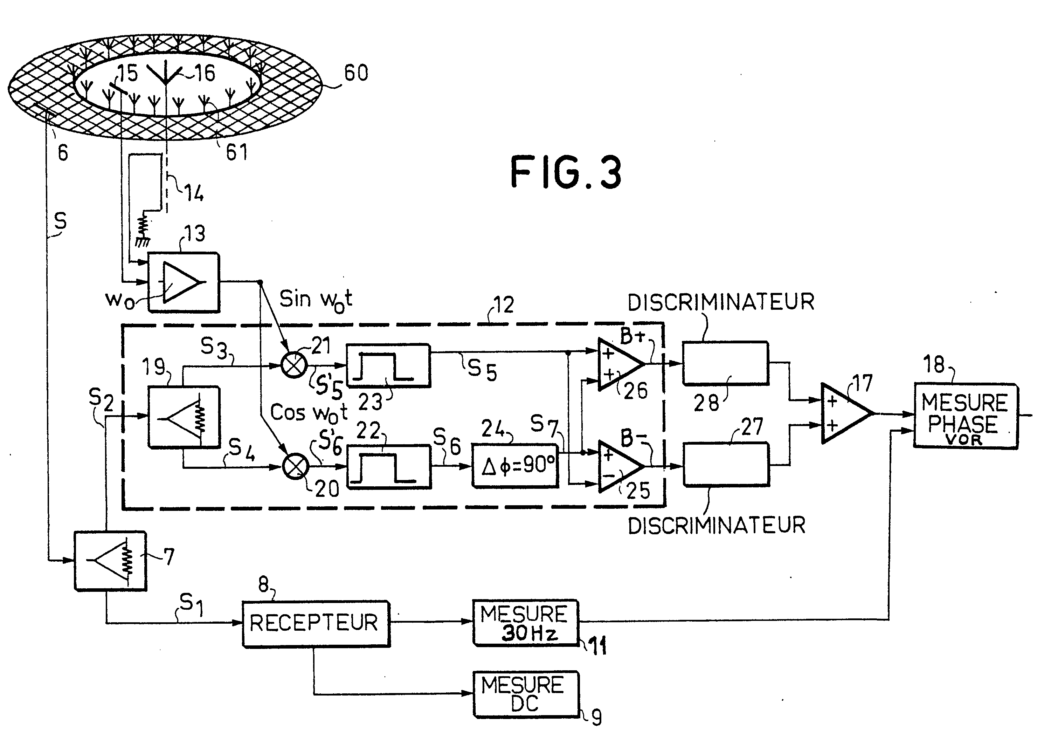

Sur la figure 3, l'ensemble des moyens 12 réalisant la séparation des bandes captées par le capteur 6 est représenté en détail. Comme on l'a vu, le signal S issu du capteur 6 est d'abord divisé en deux par le circuit 7, puis la seconde moitié $S_2$ de ce signal est à nouveau divisée en deux par le circuit 19. Les signaux $S_3$ et $S_4$ produits par ce circuit 19 passent chacun dans un mélangeur 20 et 21 attaqué par un étalon de la fréquence porteuse VHF provenant du circuit 13. Le mélangeur 20 reçoit un étalon de fréquence cos 2

$\pi f_0 t$ - $f_0$ étant la fréquence porteuse VHF - en retard de $\pi/2$ par rapport à l'étalon $\sin 2 \pi f_0 t$ reçu par le mélangeur 21. Ce retard est produit par exemple par une ligne quart d'onde, à la fréquence de fonctionnement du système.

Si on admet les expressions mathématiques suivantes pour:

— une onde porteuse: $p = P \sin (2 f_0 t + \alpha)$

— une bande latérale supérieure:
$$b_S = B_S \sin [2 \pi (f_0 + F)t + \gamma]$$

— une bande latérale inférieure:
$$b_I = B_I \sin [2 \pi (f_0 - F)t + \beta]$$

avec P, $B_S$ et $B_I$ les amplitudes respectives des trois signaux, $f_0$ la fréquence porteuse, F la fréquence du signal de modulation d'amplitude (F = 9960 Hz) et $\alpha$, $\beta$ et $\gamma$ les phases respectives des trois signaux dues à distance des antennes d'émission par rapport au capteur 6 et à toutes causes diverses. Dans ce cas, le capteur 6 reçoit un signal de la forme:

$$S = p + b_S + b_I$$
$$= P \sin (2 \pi f_0 t + \alpha) + B_S \sin [2 \pi (f_0 + F)t + \gamma] - B_I \sin [2 \pi (f_0 - F)t + \beta]$$

En sortie des mélangeurs 20 et 21, on obtient respectivement après attaque par les étalons de fréquence $\sin 2 \pi f_0 t$ et $\cos 2 \pi f_0 t$, en posant $\omega_0 = 2 \pi f_0$ et $\Omega = 2 \pi F$:

$S_5' = S \cdot \cos \omega_0 t$ et $S_6' = S \cdot \sin \omega_0 t$ soit:

$$S_5' = P' [\cos \alpha - \cos (2 \omega_0 + \alpha)] + B_S' [\cos (\Omega t - \beta) - \cos (2 \omega_0 - \Omega)t + \gamma)]$$
$$+ B_I' [\cos (\Omega t + \gamma) - \cos (2 \omega_0 - \Omega)t + \gamma)]$$

et $S_6' = P' [\sin (2 \omega_0 t + \alpha)] + B_S' [\sin (2 \omega_0 - \Omega)t + \beta] + \sin (- \Omega t + \beta)$
$$+ B_I' [\sin (2 \omega_0 + \Omega)t + \gamma + \sin (\Omega t + \gamma)]$$

P', $B_S'$ et $B_I'$ étant les amplitudes des différentes composantes après passage dans les circuits diviseurs. Les signaux $S_5'$ et $S_6'$ deviennent, après passage dans les filtres passe-bande 22 et 23 de fréquence centrale égale à 9960 Hz:

$$S_5 = B_S' \cos (\Omega t - \beta) + B_I' \cos (\Omega t + \gamma)$$

$$S_6 = - B_S' \sin (\Omega t - \beta) + B_I' \sin (\Omega t + \gamma)$$

On déphase le signal $S_6$ d'un angle égal à $\pi/2$, grâce au déphaseur 24, et on somme les signaux $S_5$ et $S_6$ ainsi obtenus dans les deux circuits sommateurs 25 et 26. En sortie de ces deux circuits 25 et 26, on obtient respectivement les bandes latérales supérieure et inférieure B+ et B— centrées sur la fréquence 9960 Hz. Ces deux signaux passent dans deux discriminateurs 27 et 28 qui transforment les variations de fréquence en variation de tension. Comme on l'a dit à propos de la figure 2, on obtient en sortie du comparateur 17 le signal 30 Hz «variable» modulant en fréquence le signal 9960 Hz de modulation d'amplitude de l'onde porteuse VHF, dont la phase variable est comparée ensuite avec celle du signal 30 Hz «de référence» dans le circuit 18.

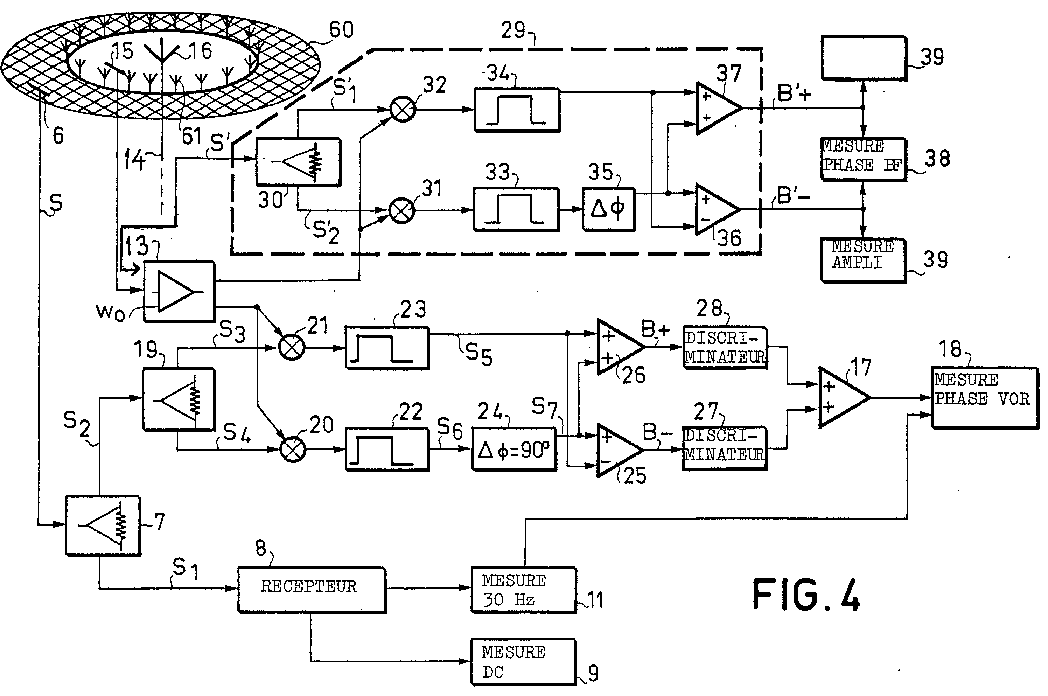

Pour parfaire ce dispositif de contrôle, notamment en ce qui concerne la détection des pannes d'émission d'une ou plusieurs antennes, on le complète par un second dispositif de traitement du signal émis par le système VOR Doppler et reçu par l'antenne centrale. Ce second dispositif de traitement comporte des moyens de détection des pannes d'antennes et des moyens de contrôle de la phase de la porteuse fantôme des bandes latérales à ± 9960 Hz par rapport à celle de la porteuse VHF. De tels moyens sont représentés sur la figure 4, sur laquelle est porté le premier dispositif de traitement décrit auparavant.

Le signal VOR est reçu par l'antenne centrale 16 et prélevé par le coupleur 14 placé sur le feeder de l'antenne. Les bandes latérales supérieure et inférieure sont séparées par un ensemble de moyens 29 identique à l'ensemble 12. En effet, le signal S' provenant du coupleur 14 est divisé en deux par le circuit 30, chaque nouveau signal $S_1'$ et $S_2'$ passant par un mélangeur 31-32, puis un filtre passe-bande 33 et 34 de fréquence centrale égale à 9960 Hz. Un déphaseur 35 joue le même rôle que le déphaseur 24 à l'entrée des deux circuits sommateurs 36 et 37, qui délivrent les deux signaux représentant les deux bandes latérales B+ et B—, mais sans qu'ils soient modulés en fréquence puisque la position de l'antenne centrale annule l'effet Doppler dû au déplacement théorique de 48 autres antennes par rapport à cette dernière.

Les moyens de détection des pannes d'antenne mis en place dans ce second dispositif de traitement sont donc constitués par l'ensemble 29 de moyens séparant les deux bandes latérales à ± 9960 Hz et par deux circuits 39 de mesure des variations d'amplitude des signaux représentant ces deux bandes. Ainsi, sur chaque signal sortant des circuits sommateurs 36 et 37, et représentant les deux bandes latérales indépendamment l'une de l'autre, il est beaucoup plus aisé de remarquer une panne d'émission d'une ou de plusieurs antennes que sur un signal délivrant les deux bandes latérales simultanément comme dans l'art antérieur.

Les moyens réalisant la différence de phase entre la fréquence porteuse de l'onde VHF et la fréquence porteuse fantôme des deux bandes latérales sont mis en œuvre par l'ensemble 29 déjà décrit suivi d'un circuit 38 effectuant la mesure de phase de deux signaux BF à la même fréquence, suivant tout dispositif connu tel un compteur.

On a ainsi décrit un dispositif de contrôle appliqué au système VOR Doppler et dont les principaux avantages sont les suivants:

— une sécurité de contrôle accrue du signal émis par le VOR, grâce à la surveillance indépendante des bandes latérales supérieure et inférieure ± 9960 Hz de la modulation d'amplitude de l'onde porteuse VHF et grâce au contrôle effectif des relations de phase VHF entre l'onde porteuse et les bandes latérales. Il est possible, grâce à ce dispositif, de placer plusieurs capteurs dans différentes directions, ce qui permet alors soit de constituer une courbe d'erreurs de maintenance, soit de vérifier l'exactitude de l'information VOR dans ces directions;

— une mise en œuvre aisée, quel que soit le relief proche du système VOR Doppler;

— une absence de sensibilité à la parallaxe.

## Revendications

1. Dispositif de contrôle d'un système de radionavigation du type VOR Doppler, système comportant une antenne centrale (16) rayonnant omnidirectionnellement une onde porteuse très haute fréquence modulée en amplitude par un premier signal sinusoïdal de fréquence 30 Hz dit «de référence», et par un réseau circulaire d'antenns (61) rayonnant les deux bandes latérales à ± 9960 Hz de l'onde porteuse VHF, ces bandes latérales étant elles-mêmes modulées en fréquence par un second signal sinusoïdal de fréquence 30 Hz, dit «variable», dont la phase varie par rapport à celle du premier signal 30 Hz, comprenant des moyens de contrôle du signal émis par le système VOR Doppler comportant un capteur (6) et un premier dispositif de traitement du signal reçu par le capteur, dispositif de traitement comportant:

— des premiers moyens (11) de mesure du taux de modulation du signal 30 Hz de référence à partir du signal reçu par le capteur;

— des seconds moyens (9) de mesure de la composante continue du signal reçu par le capteur (6); caractérisé en ce que le capteur (6) est placé à proximité des antennes d'émission du système VOR et en ce que le premier dispositif de traitement du signal reçu par le capteur comporte en outre:

— des moyens (12) de séparation des deux bandes latérales supérieure et inférieure (B⁺, B⁻);

— des moyens d'obtention (17, 27 et 28) du signal 30 Hz variable à partir des deux bandes latérales (B⁺, B⁻);

— des troisièmes moyens (18) de mesure de la différence de phase entre le signal 30 Hz variable issu des moyens d'obtention (17, 27 et 28) et le signal 30 Hz référence issu des premiers moyens (11).

2. Dispositif de contrôle selon la revendication 1, caractérisé en ce qu'il comporte un second dispositif de traitement du signal émis par le système VOR Doppler et reçu par l'antenne centrale comprenant:

— des moyens (29) de séparation des deux bandes latérales supérieure et inférieure (B⁺, B⁻);

— des moyens (39) de détection des pannes d'antenne par mesure des variations d'amplitude de ces deux bandes latérales (B⁺, B⁻);

— des moyens (38) de contrôle de la différence de phase entre la fréquence de l'onde porteuse et la fréquence de l'onde porteuse fantôme des deux bandes latérales.

3. Dispositif de contrôle suivant la revendication 1, caractérisé en ce que les moyens de séparation (12) des deux bandes latérales à ± 9960 Hz du premier dispositif de traitement du signal reçu par le capteur (6) comprennent:

— un circuit diviseur (19) séparant le signal reçu (S₂) en deux signaux identiques (S₃ et S₄),

— deux circuits mélangeurs (20 et 21) attaqués d'une part par les signaux (S₃ et S₄) et d'autre part par les étalons de la fréquence VHF de l'onde porteuse émise par l'antenne centrale (16) omnidirectionnelle et fournissant les signaux (S₅′ et S₆′),

— deux filtres passe-bande (22 et 23) filtrant les signaux (S₅′ et S₆′),

— un déphaseur (24) déphasant de 90° le signal S₆ issu du filtre (22) par rapport au signal S₅ issu du filtre (23),

— deux sommateurs (25 et 26) combinant les signaux précédents pour fournir séparément les deux bandes latérales supérieure et inférieure (B⁺, B⁻) centrées sur la fréquence 9960 Hz.

4. Dispositif de contrôle selon la revendication 1, caractérisé en ce que les moyens d'obtention du signal 30 Hz variable à partir des deux bandes latérales comportent:

— deux discriminateurs de fréquence (27 et 28) fournissant les deux signaux 30 Hz «variables» modulant respectivement en fréquence les deux bandes latérales,

— un circuit sommateur (17) additionnant les deux signaux 30 Hz précédents pour donner le signal sinusoïdal 30 Hz dit «variable».

5. Dispositif de contrôle suivant la revendication 2, caractérisé en ce que les moyens de séparation (29) des deux bandes latérales du second dispositif de traitement du signal reçu par l'antenne centrale (16) comprennent:

— un circuit diviseur (30) séparant le signal reçu S′ en deux signaux identiques S₁′ et S₂′;

— deux circuits mélangeurs (31 et 32) attaqués d'une part par les signaux S₁′ et S₂′ et d'autre part par les étalons de la fréquence VHF de l'onde porteuse;

— deux filtres passe-bande (33 et 34) filtrant les signaux issus des mélangeurs;

— un déphaseur (33) déphasant de 90° le signal issu du filtre (33);

— deux circuits sommateurs (36 et 37) combinant le signal issu du déphaseur (33) et celui issu du filtre (34) pour fournir séparément les deux bandes latérales supérieure et inférieure (B⁺, B⁻).

6. Utilisation d'un dispositif de contrôle suivant l'une des revendications 1 à 5 dans un système de radionavigation du type VOR Doppler.

**Patentansprüche**

1. Vorrichtung zur Steuerung eines Radionavigationssystems vom VOR-Doppler-Typ, wobei dieses System enthält: eine zentrale Antenne (16), die eine Höchstfrequenz-Trägerschwingung omnidirektional abstrahlt, welche amplitudenmoduliert ist durch ein erstes sinusförmiges Signal der Frequenz 30 Hz, welches als «Referenzsignal» bezeichnet wird, und eine kreisrunde Gruppierung von Antennen (61), welche die beiden Seitenbänder bei ∓ 9960 Hz der VHF-Trägerschwingung abstrahlen, wobei diese Seitenbänder ihrerseits frequenzmoduliert sind durch ein zweites sinusförmiges Signal der Frequenz 30 Hz, das als «variables Signal» bezeichnet wird und dessen Phase gegenüber der des ersten 30 Hz-Signals variiert, und mit Mitteln zur Steuerung des durch das VOR-Doppler-System gesendeten Signals, die einen Signalaufnehmer (6) sowie eine erste Verarbeitungsvorrichtung zur Verarbeitung des von dem Signalaufnehmer empfangenen Signals enthalten, und wobei die Verarbeitungsvorrichtung enthält:

— erste Mittel (11) zur Messung des Modulationsgrades des 30 Hz-Referenzsignals aufgrund des von dem Signalaufnehmer empfangenen Signals;

— zweite Mittel (9) zur Messung der Gleichkomponente des von dem Signalaufnehmer (6) empfangenen Signals;

stems angeordnet ist und dass die erste Verarbeitungsvorrichtung zur Verarbeitung des von dem Signalaufnehmer empfangenen Signals ferner enthält:

— Mittel (12) zur Trennung der zwei Seitenbänder, des oberen und des unteren (B$^+$, B$^-$);

— Mittel (17, 27 und 28) zur Gewinnung des variablen 30 Hz-Signals aus den zwei Seitenbändern (B$^+$, B$^-$);

— dritte Mittel (18) zur Messung der Phasendifferenz zwischen dem variablen 30 Hz- Signal, das von den Gewinnungsmitteln (17, 27 und 28) erhalten wird, und dem 30 Hz-Referenzsignal, das von den ersten Mitteln (11) ausgeht.

2. Steuervorrichtung nach Anspruch 1, dadurch gekennzeichnet, dass sie eine zweite Vorrichtung zur Verarbeitung des von dem VOR-Dopplersystem gesendeten und durch die zentrale Antenne empfangenen Signals enthält, umfassend:

— Mittel (29) zur Trennung der beiden Seitenbänder, des oberen und des unteren (B$^+$, B$^-$);

— Mittel (39) zur Detektion von Antennenausfällen durch Messung der Amplitudenvariationen dieser beiden Seitenbänder (B$^+$, B$^-$);

— Mittel (38) zur Steuerung der Phasendifferenz zwischen der Frequenz der Trägerschwingung und der Frequenz der Phantomträgerschwingung der zwei Seitenbänder.

3. Steuervorrichtung nach Anspruch 1, dadurch gekennzeichnet, dass die Mittel (12) zur Trennung der beiden bei ± 9960 Hz liegenden Seitenbänder der ersten Vorrichtung zur Verarbeitung des durch den Signalaufnehmer (6) empfangenen Signals enthalten:

— eine Teilerschaltung (19), welche das empfangene Signal (S$_2$) in zwei gleiche Signale teilt (S$_3$ und S$_4$),

— zwei Mischerschaltungen (20 und 21), die einerseits durch die Signale (S$_3$ und S$_4$) und andererseits durch die VHF-Frequenznormale der durch die omnidirektionale zentrale Antenne (16) abgestrahlten Trägerschwingung angesteuert werden und die Signale (S$_5$' und S$_6$') liefern,

— zwei Bandpassfilter (22 und 23), welche die Signale (S$_5$' und S$_6$') ausfiltern.

— einen Phasenschieber (24), der das von dem Filter (22) abgegebene Signal S$_6$ um 90° gegenüber dem Signal S$_5$ verschiebt, das von dem Filter (23) abgegeben wird,

— zwei Summierer (25 und 26), welche die genannten Signale kombinieren, um getrennt die zwei Seitenbänder, das obere und das untere (B$^+$, B$^-$), auf die Frequenz 9960 Hz zentriert zu liefern.

4. Steuervorrichtung nach Anspruch 1, dadurch gekennzeichnet, dass die Mittel zur Gewinnung des variablen 30 Hz-Signals aus den beiden Seitenbändern enthalten:

— zwei Frequenzdiskriminatoren (27 und 28), welche die beiden «variablen» 30 Hz-Signale liefern, die jeweils eines der zwei Seitenbänder frequenzmodulieren,

— eine Summierschaltung (17), welche die beiden genannten 30 Hz-Signale addiert, um das «variable» sinusförmige 30 Hz-Signal zu erhalten.

5. Steuervorrichtung nach Anspruch 2, dadurch gekennzeichnet, dass die Mittel (29) zur Trennung der zwei Seitenbänder der zweiten Vorrichtung zur Verarbeitung des durch die zentrale Antenne (16) empfangenen Signals enthalten:

— eine Teilerschaltung (30), welche das empfangene Signal S' in zwei gleiche Signale S$_1$' und S$_2$' trennt;

— zwei Mischerschaltungen (31 und 32), welche einerseits durch die Signale S$_1$' und S$_2$' und andererseits durch die VHF-Frequenznormale der Trägerschwingung angesteuert werden;

— zwei Bandpassfilter (33 und 34), welche die von den Mischern abgegebenen Signale ausfiltern;

— einen Phasenschieber (33), welcher das von dem Filter (33) abgegebene Signal um 90° phasenverschiebt;

— zwei Summierschaltungen (36 und 37), welche das von dem Phasenschieber (33) abgegebene Signal sowie das von dem Filter (34) abgegebene Signal kombinieren, um getrennt die zwei Seitenbänder, das obere und das unter (B$^+$, B$^-$), zu liefern.

6. Verwendung der Steuervorrichtung nach einem der Ansprüche 1 bis 5 in einem Radionavigationssystem vom VOR-Doppler-Typ.

**Claims**

1. Device for controlling a radio navigation system of the VOR Doppler type, said system comprising a central antenna (16) radiating omnidirectionally a hyperfrequency carrier wave amplitude modulated by a first sinusoidal signal of frequency 30 Hz, referred to as «reference» signal, and a circular array of antennas (61) radiating the two lateral bands at ± 9960 Hz of the VHF carrier wave, said lateral bands being themselves frequency modulated by a second sinusoidal signal of frequency 30 Hz referred to as «variable» signal, the phase of which varies with respect to that of the first 30 Hz signal, comprising means for controlling the signal emitted by the VOR Doppler system comprising a probe (6) and a first processing device for processing the signal received by the probe, the processing device comprising:

— first means (11) for measuring the modulation degree of the 30 Hz reference signal on the basis of the signal received by the probe;

— second means (9) for measuring the direct component of the signal received by the probe (6); characterized in that the probe (6) is located in the vicinity of the transmission antennas of the VOR system and that the first processing device for processing the signal received by the probe further comprises:

— means (12) for separating the two lateral bands, the upper and lower (B$^+$, B$^-$);

— means (17, 27 and 28) for obtaining the variable 30 Hz signal from the two lateral bands (B$^+$, B$^-$);

— third means (18) for measuring the phase difference between the variable 30 Hz signal coming from the obtaining means (17, 27 and 28) and the reference 30 Hz signal coming from the first means (11).

2. Control device according to claim 1, characterized in that it comprises a second device for processing the signal emitted by the VOR Doppler system and received by the central antenna comprising:

— means (29) for separating the two lateral bands, the upper and lower (B$^+$, B$^-$);

— means (39) for detecting antenna failures by measuring the amplitude variations of said two lateral bands (B$^+$, B$^-$);

— means (38) for controlling the phase difference between the frequency of the carrier wave and the frequency of the phantom carrier wave of the two lateral bands.

3. Control device according to claim 1, characterized in that the means (12) for separating the two lateral bands at ± 9960 Hz of the first device for processing the signal received by the probe (6) comprise:

— a divider circuit (19) separating the signal received (S$_2$) into two identical signals (S$_3$ and S$_4$),

— two mixer circuits (20 and 21) fed on the one hand by the signals (S$_3$ and S$_4$) and on the other hand by the VHF frequency standards of the carrier wave emitted by the omnidirectional central antenna (16) and furnishing the signals (S$_5'$ and S$_6'$),

— two band pass filters (22 and 23) filtering the signals (S$_5'$ and S$_6'$),

— a phase shifter (24) which shifts the signals S$_6$ emitted by the filter (22) by 90° with respect to the signal S$_5$ emitted by the filter (23),

— two summing means (25 and 26) combining the aforementioned signals for separately furnishing the two lateral bands, upper and lower (B$^+$, B$^-$), centered on the frequency 9960 Hz.

4. Control device according to claim 1, characterized in that the means for obtaining the variable 30 Hz signal from the two lateral bands comprise:

— two frequency discriminators (27 and 28) furnishing the two «variable» 30 Hz signals frequency modulating the two lateral bands,

— a summation circuit (17) adding the two aforementioned 30 Hz signals for obtaining the 30 Hz sinusoidal signal referred to as «variable».

5. Control device according to claim 2, characterized in that the means (29) for separating the two lateral bands of the second device for processing the signal received by the central antenna (16) comprise:

— a divider circuit (30) separating the signal received S' into two identical signals S$_1'$ and S$_2'$;

— two mixer circuits (31 and 32) fed on the one hand by the signals S$_1'$ and S$_2'$ and on the other hand by the VHF frequency standards of the carrier wave;

— two band pass filters (33 and 34) filtering the signals emitted by the mixers;

— a phase shifter (33) phase shifting the signal emitter by the filter (33) by 90°;

— two summation circuits (36 and 37) combining the signal emitted by the phase shifter (33) and that emitted by the filter (34) for separately furnishing the two lateral bands, upper and lower (B$^+$, B$^-$).

6. Use of the control device according to any one of claims 1 to 5 in a radio navigation system of the VOR Doppler type.

# FIG.1

FIG. 2

SEPARA-TEUR (13)

SEPARA-TION B L (12)

DISCRIMINATEUR (28)

DISCRIMINATEUR (27)

MESURE PHASE VOR (18)

RECEPTEUR (8)

MESURE 30 Hz (11)

MESURE DC (9)

# FIG.3

0 034 974

FIG. 4